# EUROPEAN PATENT APPLICATION

(11) **EP 4 723 075 A1**
(43) Date of publication of application: **08.04.2026**
(21) Application number: 25204433.4
(22) Date of filing: 24.09.2025
(51) Int. Cl.: G08C 17/02

(54) **WIRELESSLY CONTROLLABLE HOIST SYSTEM WITH LOST REMOTE AVOIDANCE**

(30) Priority: 26.09.2024 US 202463699343 P
(71) Applicant: Liko Research & Development AB, 975 92 Luleå (SE)
(72) Inventor: APPRIOU, Ronan, 975 92 Luleå (SE); WIBAUX, Francois, 975 92 Luleå (SE); AUDIC, Mickael, 975 92 Luleå (SE); SCOLAN, Maxime Emile, 975 92 Luleå (SE)
(74) Representative: Reddie & Grose LLP

(57) **Abstract**

A wirelessly controllable hoist system is disclosed. The system includes a hoist assembly that includes a hoist wireless transceiver configured for personal area network communications, and a remote control unit to control the hoist assembly. The remote control unit includes a remote wireless transceiver that communicates with the hoist wireless transceiver via a personal area network. The remote control unit further includes an audio, a haptic, and/or a visual indication component that is affixed to a housing of the remote control unit, and which generate a respective audible or visible alarm. The remote control unit further includes a processor in communication with the remote wireless transceiver and memory storing instructions which are executed to perform at least one connection attempt to establish bi-directional communication with the hoist assembly, and in response to a failed connection attempt, generate the alarm via the audio, the haptic, or the visual indication component.

## Description

The present specification generally relates to hoists for transporting and assisting subjects with compromised mobility, and, more specifically, to a wireless remote-controlled hoist.

Overhead or mobile hoists, particularly in medical care facilities such as hospitals, rehabilitation centers, nursing homes, and other care facilities, are generally controlled by either a corded controller or a wall-mounted controller. The wall-mounted controller may be wirelessly or directly connected (e.g., wired) to the overhead hoist. The fixed nature of the controller, e.g., corded or wall-mounted, is intended, for example, to prevent the loss of the controller by a caregiver inadvertently taking the controller from the room.

However, the corded controller presents numerous difficulties in use. A caregiver must move the corded controller around obstacles, untangle the controller when necessary, avoid contacting the subject, as well as ensure that the controller remains at an accessible location for subsequent caregivers, e.g., height. The wall-mounted controller also presents challenges, albeit different from the corded controller. For example, the controller is typically mounted on a wall some distance away from the hoist. This results in the caregiver being kept at a distance from the subject, unable to effectuate any assistance should the subject be unable to grasp the hoist. Further, in some instances, the caregiver may have to turn away from the subject view the wall-mounted controller to identify and/or activate the necessary controls, e.g., raise, lower, move in the x and/or y directions, etc. Such emplacement on the wall may prevent the caregiver from identifying any issues relative to the subject and position of the hoist on ceiling.

According to at least one aspect of the present disclosure, a wirelessly controllable hoist system is disclosed. The wirelessly controllable hoist system includes a hoist assembly that includes a hoist wireless transceiver configured for personal area network communications. The system further includes a remote control unit that is operable to control the hoist assembly. The remote control unit includes a remote wireless transceiver that is configured to communicate with the hoist wireless transceiver of the hoist assembly via a personal area network. The remote control unit further includes one or more of an audio, a haptic, or a visual indication component that is affixed to a housing of the remote control unit, and which are configured to generate a respective audible or visible alarm. The remote control unit further includes a processor that is in communication with the remote wireless transceiver and memory storing instructions which are executed by the processor to perform at least one connection attempt to establish bi-directional communication with the hoist assembly, and in response to a failed connection attempt, generate the alarm via the at least one of the audio, the haptic, or the visual indication component.

According to at least one aspect of the present disclosure, a remote control unit of a hoist system is disclosed. The remote control unit includes a remote wireless transceiver that is configured for communication with a wireless transceiver of an associated hoist assembly via a personal area network. The remote control unit also includes one or more of an audio, a haptic, or a visual indication component that are affixed to a housing of the remote control unit, and which are operable to generate a respective audible or visible alarm. The remote control unit further includes a processor that is in communication with the remote wireless transceiver and memory storing instructions which are executed by the processor to initiate a connection timer corresponding to a time period during which a connection attempt is made, and perform at least one connection attempt to establish bi-directional communication with the hoist assembly during the time period. The instructions stored in memory also are executed by the processor to, in response to a preset number of failed connection attempts, generate the alarm via the audio, the haptic, and/or the visual indication component.

According to at least one aspect of the present disclosure, a remote control unit of a hoist system is disclosed. The remote control unit includes a remote wireless transceiver that is configured for communication with a wireless transceiver of an associated hoist assembly via a personal area network. The remote control unit also includes one or more of an audio, a haptic, or a visual indication component that is affixed to a housing of the remote control unit, and which are operable to generate a respective audible or visible alarm. The remote control unit further includes a processor in communication with the remote wireless transceiver and memory storing instructions which are executed by the processor to initiate a connection timer corresponding to a time period during which a connection attempt is made, and perform the connection attempt to establish bi-directional communication with the hoist assembly during the time period. The remote control unit also includes instructions to increment a retry counter in response to a failed connection attempt occurring during the time period, and to compare the incremented retry counter to a retry limit of failed connection attempts. Additionally, the remote control unit includes instructions to generate the alarm via the at least one of the audio, the haptic, or the visual indication component in response to a result of the comparison meeting the retry limit of failed connection attempts.

According to at least one aspect of the present disclosure, a wirelessly controllable hoist system is disclosed. The system includes a hoist assembly that includes a hoist wireless transceiver configured for personal area network communications. The system also includes a remote control unit operable to wirelessly control the hoist assembly. The remote control unit includes a remote wireless transceiver configured for communication with the hoist wireless transceiver of the hoist assembly via a personal area network, and one or more of an audio, a haptic, or a visual indication component affixed to a housing of the remote control unit. The audio, haptic, or visual indication component are operable to generate a respective audible or visible alarm. The remote control unit also includes a processor in communication with the remote wireless transceiver and memory storing instructions which are executed by the processor to initiate a check timer corresponding to a check time period to occur before a connection request is attempted, and to initiate, in response to the check timer having met or exceeded the check time period, a connection timer corresponding to a time period during which the connection attempt is made. The remote control unit also includes instructions to perform the connection attempt to establish bi-directional communication with the hoist assembly during the time period, and increment a retry counter in response to a failed connection attempt occurring during the time period. The remote control unit further includes instructions to compare the incremented retry counter to a retry limit of failed connection attempts, and to generate the alarm via the at least one of the audio, the haptic, or the visual indication component in response to a result of the comparison meeting the retry limit of failed connection attempts.

The invention will now be further described by way of example with reference to the accompanying drawings, in which:
FIG. 1 depicts a view of an illustrative wirelessly controlled hoist system according to one or more aspects shown and described herein;
FIG. 2 depicts a close-up view of an illustrative wirelessly controlled hoist assembly and remote control unit according to one or more aspects shown and described herein;
FIG. 3 provides a view of an illustrative remote control unit for wirelessly controlling a hoist assembly according to one or more aspects shown and described herein;
FIG. 4 depicts an exploded view of various components of an illustrative carriage component and hoist assembly according to one or more aspects shown and described herein;
FIG. 5 depicts a block diagram of internal components of the illustrative remote control unit according to one or more aspects shown and described herein;
FIG. 6 depicts a block diagram of internal components of the illustrative hoist assembly according to one or more aspects shown and described herein;
FIG. 7 illustrates a flow diagram of lost remote control unit detection according to one or more aspects shown and described herein;
FIG. 8 schematically illustrates an example depiction of a remote control unit inside a coverage area; and
FIG. 9 schematically illustrates an example depiction of a remote control unit outside a coverage area.

The present disclosure relates to embodiments of interconnected components of an overhead hoist system that allows for a hoist assembly to be coupled, untethered, to a wall-mounted control unit, and/or a remote control unit. The embodiments described herein provide for the detection and avoidance of remote control unit loss through the untethered communications link established between the remote control unit and the hoist assembly. Although described hereinafter with respect to an overhead hoist system, it will be appreciated that the detection and avoidance of loss of the remote control unit may also be utilized with respect to a mobile lift system (e.g., a freestanding lift unit). Regardless, the hoist units are communicatively coupled to various additional components, including an untethered, wall-mounted control, a remote control, and the like. The communications between the various components allow for pairing of hoist assemblies with particular remote control units utilizing personal area network communication standards to detect when a remote control unit is beyond a predetermined distance from the paired hoist assembly and generate an audio and/or visual alert on the remote control unit indicative of the loss.

The phrase "communicatively coupled" is used herein to describe the interconnectivity of various components of the lifts for the purposes of transmitting and/or receiving signals, transmitting and/or receiving data, and/or the like and means that the components are generally coupled wirelessly such that signals may be exchanged between the components. It should be understood that other means of connecting the various components of the system not specifically described herein (e.g., wired connections) are included without departing from the scope of the present disclosure.

As will be evident from the present disclosure, a remotely control that is paired to a specific hoist assembly may provide may provide several advantages over controls that are tethered to a hoist assembly or even wall-mounted controls. For example, the remote control unit described herein are not limited to a particular position within a room, allowing the caregiver to be closer to the subject, while not hindering movement of certain hoists, such as rail-mounted hoists, as such overhead hoists must sometimes move over other equipment. Having a wall-mounted control unit requires the caregiver to be relatively distant from the subject, and require a caregiver to possibly lose sight of the subject in order to visually access the controls contained thereon. Further, having a tethered control would cause the control to get caught or otherwise impede movement of the hoist when the hoist is moved over equipment. Additionally, sometimes the tether may not be reachable in instances where ceilings are high and/or users are short, but a remote control is always reachable. Remote control units may sometimes be lost or misplaced, e.g., a caregiver leaves the room with the remote in a pocket. The present disclosure, however, overcomes this potential issue by utilizing a personal area network standard to detect distance of the remote control unit and generate indicia to the caregiver that the remote is in their possession, e.g., pocket, cart, etc., when they leave the room and/or proximity relative to the hoist.

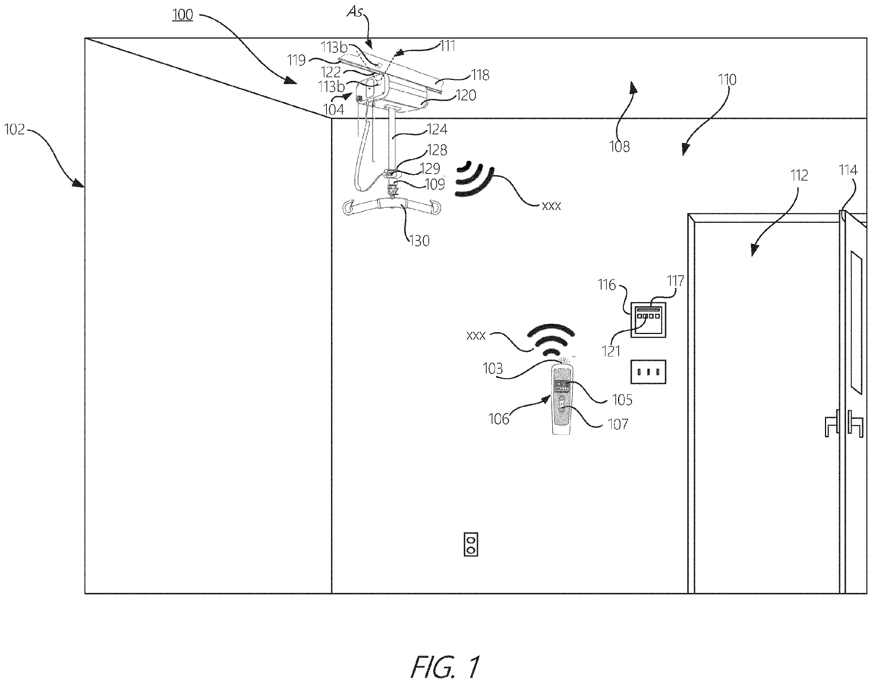

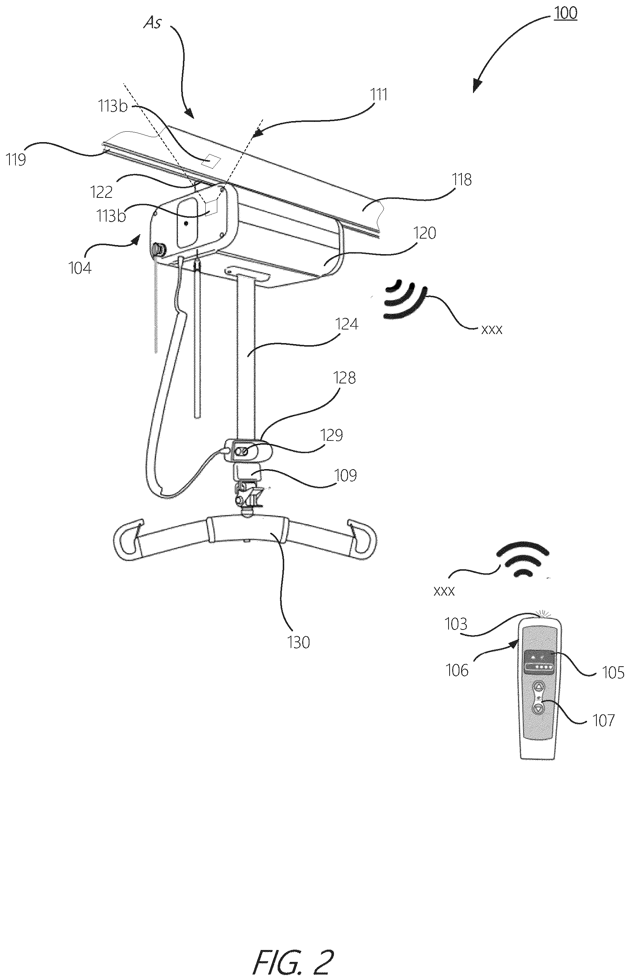

Referring now to **FIGS. 1-2****,** there is shown an illustrative implementation of a wirelessly controlled hoist system **100** with remote control unit loss detection and/or prevention in accordance with some aspects shown and described herein. In the example illustration of **FIGS. 1-2****,** the wirelessly controlled hoist system **100** includes a hoist assembly **104** that is movably attached via a carriage component **122** to a rail **118** attached to a ceiling **108** of a room **102** of a care facility and remote control unit **106** configured to remotely control operations of the hoist assembly **104** via one or more wireless communications protocols. The room **102** includes one or more walls **110,** an entranceway **112,** a door **114,** and the like. In some aspects, the wirelessly controlled hoist system **100** may include a wall-mounted control unit **116,** in wired or wireless communication with the hoist system **100.** It will be appreciated that the room **102** may correspond, for example and without limitation, to a hospital room, a ward, an operating room, a rehabilitation room, a nursing home residential room or clinic, a doctor's office, or a residential room equipped with the hoist system **100.** In accordance with other aspects, the rail **118** may be configured to extend along a ceiling of hallway, corridor, or other area of a care facility.

The hoist assembly **104** shown in **FIGS. 1-2** may include a lift strap **124** operably coupled to a motor (not shown) within the hoist assembly **104.** In some aspects, the lift strap **124** may be configured to assist in the supporting and/or lifting of a subject. Accordingly, the motor may raise or lower the lift strap **124,** thereby effectuating the raising or lowering of the subject. A sling bar **130** may be coupled to an end of the lift strap **124** opposite the end of the lift strap **124** operably connected to the hoist assembly **104,** e.g., the internal motor thereof. While a sling bar **130** is shown in **FIGS. 1-2****,** it will be appreciated that other suitable attachments may be coupled to the lift strap **124** to perform a variety of lifting and/or lowering operations. Alternatively, one or more attachments, e.g., a sling, harness, etc., may be removably coupled to the lift strap **124.**

The wirelessly controlled hoist system **100** shown in **FIGS. 1-2** may further include a load sensor **109,** which may be arranged and configured to sense various characteristics and/or parameters associated with the hoist assembly **104.** For example, the load sensor **109** may be positioned on or adjacent to the lift strap **124** to sense a tension of the lift strap **124,** which may be used to determine a type of sling bar **130** being used, whether a subject is presently being supported by the sling bar **130,** the weight of a subject supported by the sling bar **130,** and/or a positioning of a subject supported by the sling bar **130.** As such, the load sensor **109** may be a load cell, such as a hydraulic load cell, a pneumatic load cell, a piezoelectric load cell, a strain gauge load cell, and/or the like. It will be appreciated that while only a single load sensor **109** is shown in **FIGS. 1-2****,** more than one load sensor may also be used without departing from the present disclosure. For example and without limitation, the hoist system **100** may include a plurality of load sensors **109** positioned on or adjacent to the lift strap **124.** In accordance with some aspects contemplated herein, the load sensor **109** may provide information that is transmitted to one or more components of the hoist system **100** and used for a plurality of purposes, such as displaying load related data to a caregiver or the like. The hoist system **100** may also include one or more other sensors that sense various characteristics associated with the hoist system **100,** including, for example and without limitation, movement of the hoist assembly **104,** movement of the lift strap **124,** orientation of the sling bar **130,** type of attachment coupled to the lift strap **124,** and/or the like. One illustrative, non-limiting example of such a sensor is a potentiometer.

According to some aspects illustrated in **FIGS. 1-2****,** the hoist system **100** may further include a locating system **111.** The locating system **111** generally includes a first component **113a** and a second component **113b.** The first component **113a** and the second component **113b** function as a receiver and a transmitter. That is, the first component **113a** may be a receiver or a transmitter and the second component **113b** may be a transmitter or a receiver. For example, when the first component **113a** is implemented as a receiver, the second component **113b** may be implemented a transmitter, and *vice versa.*

Accordingly, when the first component **113a** and the second component **113b** are configured as a transmitter, the components **113a-113b** are generally any device or component that transmits, displays, or otherwise provides an encoded signal that is obtainable or otherwise receivable by the receiver. Similarly, when the first component **113a** and the second component **113b** are configured as a receiver, the components **113a-113b** are generally any device or component that obtains or otherwise receives the encoded signal from the transmitter. The transmitter may be a passive device such as a printed code (such as a barcode, a QR code, or the like), or may be an active device such as an infrared (IR) beacon, a radio frequency identification (RFID) emitter or tag, a wireless transmitter, or the like. The transmitter is printed, attached, or otherwise affixed to an area on or around the rail **118,** a portion of the hoist assembly **104,** a portion of the carriage component **122,** and/or the like. In some aspects where the transmitter is an RFID emitter or tag affixed to the rail **118,** the RFID emitter or tag may be affixed in such a manner that the RFID signal is not propagated through the rail **118** (e.g., by coupling the RFID emitter or tag to an insulation device or the like).

According to other aspects shown and illustrated in **FIGS. 1-2****,** the receiver may be an imaging device, an IR receiver, an RFID detector (e.g., an electromagnetic field generator), a wireless receiver (e.g., a radio utilizing a wireless technology standard such as Bluetooth or 802.11x), or the like. In a particular embodiment, the receiver may include, for example, a CS468 RFID reader and a CS790 antenna available from Convergence Systems Ltd. of Hong Kong, which may be used in conjunction with one another to shape an active area of the receiver. The receiver may be attached to or integrated with a component of the hoist system **100,** such as, for example, the hoist assembly **104** or the carriage component **122,** or may be attached or integrated on or near the rail **118.** The transmitter and the receiver may further be positioned or otherwise arranged such that the encoded signal provided by the transmitter is received by the receiver when the transmitter and the receiver pass one another due to movement of the carriage component **122** along the rail **118,** as described in greater detail herein. For example, the transmitter and the receiver may be arranged such that a line-of-sight alignment is achieved between the transmitter and the receiver when the carriage component **122** passes a particular location along the rail **118.**

As depicted in **FIGS. 1-2****,** the first component **113a** is coupled to the hoist assembly **104** and the second component **113b** is affixed to the rail **118.** It will be understood that these locations are merely illustrative, and the first component **113a** and the second component **113b** may be located elsewhere with respect to the hoist system **100.** Discussion hereinafter refers to the first component **113a** coupled to the hoist assembly **104** configured as a receiver, and the second component **113b** positioned on the rail **118** configured as a transmitter for example purposes only.

The portion of the locating system **111** that functions as the receiver (e.g., the first component **113a** or the second component **113b**) may sense a sensed area **As** that generally encompasses an area adjacent to the receiver. The sensed area **As,** as shown in **FIGS. 1-2****,** may generally be an area bound by the dashed lines, which extends from the hoist assembly **104** to a portion of the rail **118.** That is, the sensed area **As** may be an area completely surrounding the receiver in some embodiments. In other aspects, the sensed area ***As*** may be an area encompassed by the field of view of the receiver, such as when the receiver is an imaging device or an IR receiver. According to other aspects, the sensed area ***As*** may be an active region that is shaped through use of appropriate antennas and readers such that only components in a particular area (e.g., along the rail **118**) are sensed.

The portion of the locating system **111** that functions as the transmitter (e.g., the first component **113a** or the second component **113b**) may be located in any location on the rail **118** throughout the room **102**, particularly in locations where it may be advantageous to determine a location of the hoist assembly **104**. It should be understood that the locating system **111** is only one illustrative example of a system that is used to determine a location of the hoist assembly **104**. Other systems and methods are also contemplated, such as, for example, one or more signal triangulation algorithms that are adapted to determine a location based on signals wirelessly transmitted to or from the hoist assembly **104**, other tracking hardware such as global positioning satellite (GPS) hardware, and/or the like.

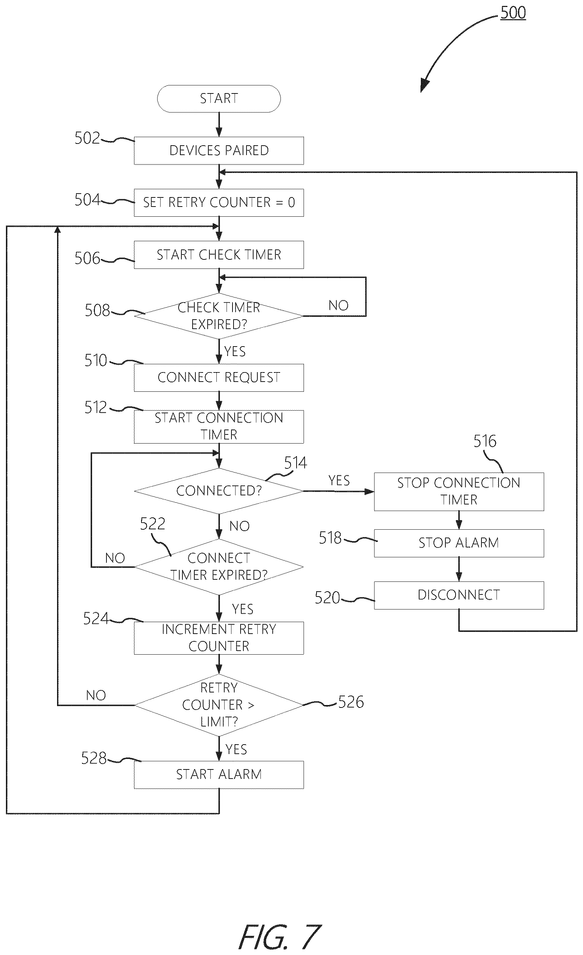

According to aspects contemplated and disclosed herein, one or more components of the hoist system **100,** e.g., the hoist assembly **104** and/or components thereof, may be operated via a hand control unit **128** operably coupled and in close proximity to the hoist assembly **104,** a wall-mounted control unit **116** that is in wired or wireless communication with the hoist assembly **104,** and/or the remote control unit **106** that is paired with and in wireless communication with the hoist assembly **104** (as discussed in greater detail below with respect to **FIG. 7**). As shown in **FIGS. 1-2****,** the hand control unit **128** is directly wired to the hoist assembly **104.** However, in accordance with other aspects, the hand control unit **128** and/or wall-mounted control unit **116** may be omitted, such that control of the hoist assembly **104** is accomplished using the remote control unit **106.**

The hand control unit **128** depicted in **FIGS. 1-2** may include a display (not shown), a sensing device (not shown), and one or more user controls **129.** According to some aspects contemplated herein, the one or more user controls **129** may be implemented as hardware components that receive inputs from a user and transmit signals corresponding to the inputs, e.g., buttons, knobs, joystick, etc., or may be implemented as a touch screen, voice activated, etc. In some implementations, the one or more user controls **129** may be combined into a single device with a display, e.g., a touch screen implementation wherein the one or more user controls **129** are displayed on the display as icons, graphics, etc. According to some aspects, the user controls **129** may, for example, enable a user, e.g., a caregiver, to raise/lower the lift strap **124** and/or sling bar **130,** activate/deactivate the motor (not shown), move the hoist assembly **104** along the rail **118,** and the like. According to various aspects capable of implementation in accordance with the subject disclosure, a sensing device (not shown) of the hand control unit **128** contains hardware for sensing a code and transmitting data corresponding to the code. Illustrative hardware includes, but is not limited to, an imaging device, an IR receiver, an RFID detector (e.g., an electromagnetic field generator), a wireless receiver (e.g., a radio utilizing a wireless technology standard such as Bluetooth^{®} or 802.11x), or the like. Further, the sensing device (not shown) may be implemented as an imaging device that is adapted to read a barcode (or any other symbology, QR code, or the like). For example, the barcode may correspond to a subject identity, a preselected location of the hoist assembly **104** and/or sling bar **130,** an identity of the caregiver, and the like.

The wall-mounted control unit **116** may include, for example, a display **117** and/or one or more user interface controls **121.** The display **117** is generally any liquid crystal display (LCD), light emitting diode (LED) display, electronic ink (e-ink) display, or the like that can display information to a user. In accordance with some aspects, the display **117** may be configured as an interactive display that can receive user inputs (e.g., a touch screen display or the like). The one or more user interface controls **121** may be hardware components that receive inputs from a user and transmit signals corresponding to the inputs. While the user interface controls **121** are depicted in **FIG.** 1 in the form of a touch screen, other user interface controls are contemplated and included within the scope of the present discussion, including, for example and without limitation, a keyboard, a mouse, a joystick, a remote control, a pointing device, a video input device, an audio input device, a haptic feedback device, and/or the like. In some aspects, the display **117** and one or more of the user interface controls **121** may be combined into a single device, such as a touchscreen display or the like (as depicted in **FIGS. 1-2**). The display **117** and/or the one or more user interface controls **121** may be used, for example, to allow a user or caregiver to interact with the wall-mounted control unit **116** for the purposes of moving components up/down, moving components laterally, activating the hoist assembly **104,** pairing a subject with the hoist assembly, returning the hoist assembly **104** to a "home" position/location, receiving information from the hoist assembly **104** (e.g., battery status, weight of load supported by the hoist assembly **104,** movement history, associated subjects, etc.), performing an emergency stop of the hoist assembly **104,** resetting the hoist assembly **104,** facilitating pairing of the remote control unit **106** with the hoist assembly **104,** and/or the like.

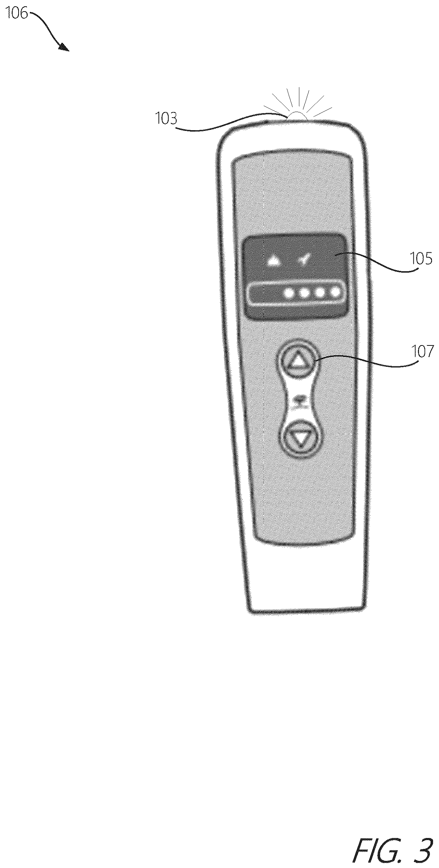

As shown in **FIGS. 1-2****,** and with reference to **FIG. 3****,** the remote control unit **106** of the hoist system **100** includes one or more components that provide functionality for using the hoist assembly **104.** For example, the remote control unit **106** may include one or more components for causing the motor within the hoist assembly **104** to extend or retract the lift strap **124,** moving components up/down, moving components laterally, activating the hoist assembly **104,** pairing a subject with a hoist assembly **104,** returning a hoist assembly **104** to a "home" position/location, receiving information from the hoist assembly **104** (e.g., battery status, weight of load supported by the hoist, movement history, associated subjects, etc.), performing an emergency stop of the hoist assembly **104,** resetting the hoist assembly **104,** and/or the like.

As shown in **FIGS. 1-3****,** the remote control unit **106** may include, for example, an indicator 103 (e.g., a visible indicator), a speaker (not shown), a vibrator (not shown), a display 105 and/or one or more user interface controls **107.** The display **105** is generally any liquid crystal display (LCD), light emitting diode (LED) display, electronic ink (e-ink) display, or the like that can display information to a user. In some embodiments, the display **105** may be configured as an interactive display that can receive user inputs (e.g., a touch screen display or the like). The one or more user interface controls **107** may be hardware components that receive inputs from a user and transmit signals corresponding to the inputs. The embodiments of **FIGS. 1-3** include user interface controls **107** in the form of physical buttons. However, other user interface controls are contemplated and included within the scope of the present disclosure, including, but not limited to, a keyboard, a mouse, a joystick, a remote control, a pointing device, a video input device, an audio input device, a haptic feedback device, a touch screen, and/or the like.

According to some aspects, the remote control unit **106** may be constructed of suitable materials capable of being disinfected, cleaned, and/or sterilized in accordance with sterile or clean room settings. For example, the remote control unit **106** may be constructed of a polymer meeting IPx4 or higher standards, allowing for steam and/or disinfectant cleanings. Suitable polymers may include, for example and without limitation, ABS (Acrylonitrile Butadiene Styrene), ABS+PC blend (Polycarbonate), Polyamide, Polycarbonate, PMMA (Polymethyl Methacrylate, Plexiglas), Phenolharz, PPE (Polyphenylene Ether)/PPO (Polyphenylene Oxide), SEBS (Styrene Ethylene Butadiene Styrene), and/or combinations thereof.

In accordance with some aspects, the display **105** and one or more of the user interface controls **107** of the remote control unit **106** may be combined into a single device, such as a touchscreen display or the like. The display **105** and/or the one or more user interface controls **107** may be used, for example, to allow a user to interact with the remote control unit **106** for the purposes of moving components up/down, moving components laterally, activating the hoist assembly **104,** pairing a subject with a hoist assembly **104,** returning the hoist assembly **104** to a "home" position/location, receiving information from the hoist assembly **104** (e.g., battery status, weight of load supported by the hoist assembly **104,** movement history, associated subjects, etc.), performing an emergency stop of the hoist assembly **104,** resetting the hoist assembly **104,** and/or the like. According to other aspects, an audible, haptic, tactile, or visual alert may be generated via the indicator **103,** speaker (not shown), vibrator (not shown) in response to a determination that the remote control unit **106** is outside a predetermined distance from the hoist assembly **104,** as discussed in greater detail below with respect to **FIG. 7**.

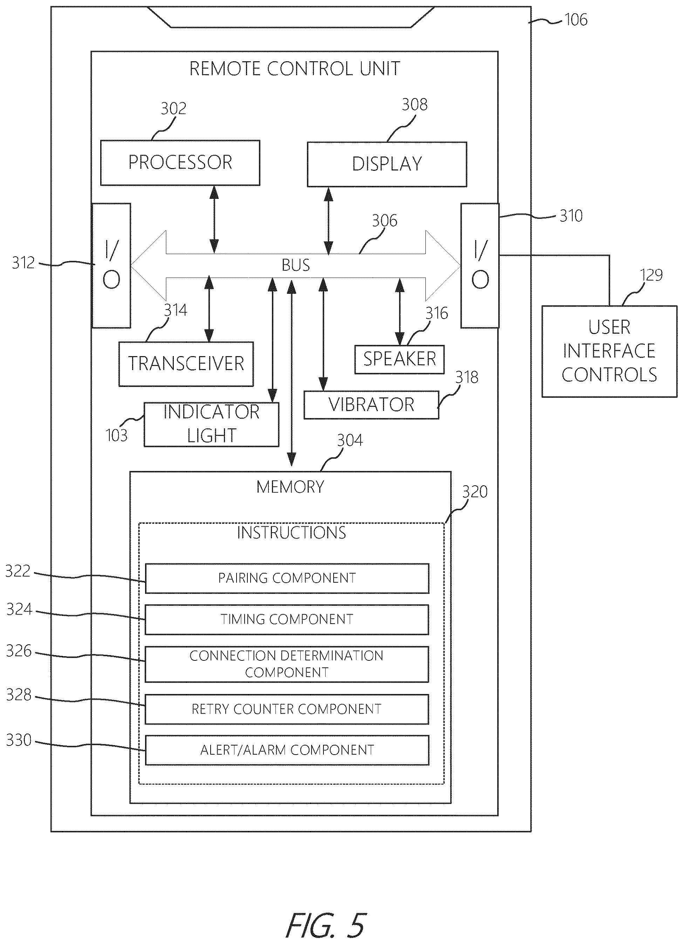

According to some aspects, the remote control unit **106** may include a near field or personal area network transceiver, capable of establishing bi-directional communications with the hoist assembly **104.** As one non-limiting example, such a transceiver may be implemented as a Bluetooth^{®} Low Energy transceiver, Wi-Fi transceiver, Zigbee^{®}, and/or the like. For example, a class of Bluetooth^{®} Low Energy devices includes Bluetooth^{®} beacons, which use Bluetooth^{®} Low Energy proximity sensing to transmit a universally unique identifier picked up by a compatible application or operating system, which can be used to determine the physical location of the device. Additional discussion regarding the transceiver is presented below with respect to **FIG. 5**. Accordingly, the remote control unit **106** may be implemented as a standalone unit that is paired, e.g., communicatively coupled, with a single hoist assembly **104.** That is, the remote control unit **106** may solely be used for the purposes of displaying information pertaining to a particular subject, displaying information pertaining to the hoist system **100** (including components thereof) with which it is paired, providing a user input that is usable to control various components, such as the hoist assembly **104,** and/or the like. As such, the remote control unit **106** may only have software programming that is suitable for the purposes described herein, and may lack programming for executing other processes. Additional details regarding the remote control unit **106** will be described herein with respect to **FIG. 5****.**

As briefly discussed above, the hoist assembly **104** of the wirelessly controlled hoist system **100** in **FIGS. 1-2** is movable along the rail **118** via the carriage component **122,** enabling the hoist assembly **104** to slide along the rail **118.** For example, in a ward or multi-subject room, the hoist assembly **104** may slide along the rail **118** across the ceiling **108** so as to be positioned over different locations within the room **102.** It will be appreciated that the illustration of **FIG. 1** depicts a partial view of the rail **118** for example purposes only. Accordingly, depending upon the facility in which the wirelessly controlled hoist system **100** is emplaced, the rail **118** may be of varying lengths and orientations, e.g., straight, curved, and/or a combination thereof. Although not shown in **FIG. 1**, the rail **118** may include one or more ends or termination points, defining the total length of the rail **118**. In some aspects, such ends or termination points may include a stopper to halt transit of the hoist assembly **104** to prevent damage thereto. End caps may also be included covering the ends of the rail **118,** as will be understood. The rail **118** depicted in **FIG. 1** may include a channel **119** defined therein for receiving a portion of the carriage component **122** to facilitate movement of the hoist assembly **104** along the rail **118.** It will be understood that while a channel **119** is shown in **FIG. 1**, other forms of rail and carriage guidance may be used in accordance with other aspects contemplated herein including, for example and without limitation, dual-rails, L-shaped rails, or the like.

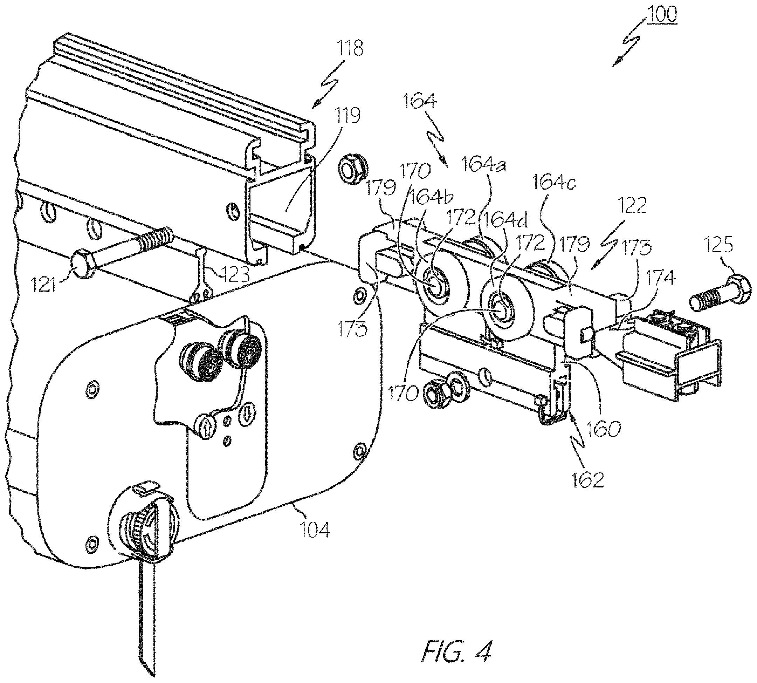

The carriage component **122** may be configured to slideably engage the rail **118,** e.g., within the channel **119,** via any suitable motive means including, for example and without limitation, one or more wheels, ball bearings, chain, belt, or the like. According to some aspects, the carriage component **122** may be self-moving, e.g., including one or more motors or drives operable to rotate the motive means to move the hoist assembly **104** along the rail **118.** Accordingly, the aspects illustrated and described herein may utilize the carriage component **122** to slide, roll, or otherwise move along the rail **118** as a subject is being moved to a desired location, or to position the hoist assembly **104** at a desired position along the travel of the rail **118.** **FIG. 4**, discussed in greater detail below, provides additional information on the carriage component **122.**

With respect to **FIG. 4**, there is shown an exploded view of the carriage component **122** and rail **118,** illustrating the hoist assembly **104** mechanically coupled to the carriage component **122,** thereby facilitating movement of the hoist assembly **104** along the rail **118.** According to some aspects set forth herein, the hoist assembly **104** a connection rail **123** which is mounted to a top surface of the hoist assembly **104.** The connection rail **123** facilitates connecting and securing the hoist assembly **104** to the carriage component **122.** As shown in **FIG. 4**, the connection rail **123** has a T-shaped configuration and the carriage component **122** has a receiving slot **162** with a complimentary configuration for receiving the connection rail **123.** The carriage component **122** may be secured to the connection rail **123** with a fastener **125,** such as a bolt and nut as depicted in **FIG. 4**, which extends transversely through openings in the carriage component **122** and a corresponding opening in the connection rail **123.**

The carriage component **122** shown in **FIG. 4** generally includes a carriage body **160** having an extension **166** to which a plurality of support wheels **164a, 164b, 164c,** and **164d** (collectively, support wheels **164**) are rotatably attached for supporting the carriage component in the rail **118.** The support wheels **164** facilitate positioning the carriage component **122** and hoist assembly **104** along the length of the rail **118**. In the embodiments described herein, the carriage component **122** is depicted with four support wheels **164**. However, it is contemplated that the carriage component **122** may be constructed with fewer than four (4) support wheels **164.** For example, in some embodiments, the carriage component **122** may be constructed with one or two support wheels **164** (e.g., a pair of support wheels **164**). Accordingly, it should be understood that the carriage component **122** includes at least one support wheel **164**. The support wheels **164** are positioned on axles **170** which extend transversely through the carriage body **160**. Each support wheel **164** is secured to the axle **170** with a fastener, such as retaining clips **172**, such that the support wheels **164** are rotatable on the axle **170**.

According to the aspects of the carriage component **122** illustrated in **FIG. 4**, the support wheels **164** are passive (e.g., the support wheels **164** are not actively driven with a motor or a similar drive mechanism) and the hoist assembly **104** is manually traversed along the rail **118** (e.g., such as when a user pushes or pulls the hoist assembly **104** along the rail **118**). However, in alternative embodiments (not shown), the support wheels may be actively driven, such as when the support wheels are coupled to a motor or a similar mechanism. In such embodiments, referring also to **FIGS. 1-2****,** the drive mechanism may be communicatively coupled to a control unit (such as the hand control unit **128,** the wall-mounted control unit **116,** and/or the remote control unit **106**) which actuates the drive mechanism and facilitates traversing the hoist assembly **104** along the rail **118** with the drive mechanism. As such, a caregiver may actuate one or more user interface controls on the hand control unit **128,** the wall-mounted control unit **116,** and/or the remote control unit **106** to cause the hoist assembly **104** to traverse along the rail **118.** Further, a caregiver may adjust a speed, a direction, and/or the like of the movement of the hoist assembly **104** along the rail **118** via the one or more user interface controls on the hand control unit **128,** the wall-mounted control unit **116,** and/or the remote control unit **106.** Further, a user may utilize data obtained regarding the hoist system **100,** a subject, and/or the like to determine potential movement parameters (e.g., speed, direction, starting/stopping, and/or the like).

According to some aspects, the one or more user controls **129** on the hand control unit 128, the wall-mounted control unit **116,** and/or the remote control unit **106** may be provided to a user based on potential movement parameters. For example, if a subject has a particular mobility score or the like, the one or more user controls **129** on the hand control unit **128,** the wall-mounted control unit **116,** and/or the remote control unit **106** may be adjusted, limited, provided, and/or the like based on the mobility score. In accordance with another example, a speed may be limited to a particular speed (e.g., a maximum, not-to-exceed speed) for a particular mobility score such that, when the user or caregiver actuates the one or more user controls **129** on the hand control unit **128,** the wall-mounted control unit **116,** and/or the remote control unit **106,** the hoist assembly **104** will not move along the rail **118** at a speed higher than the limited particular speed.

As shown in **FIG. 4**, the carriage component **122** may further include bumper assemblies **179** positioned on either end of the carriage body **160** in some embodiments. The bumper assemblies **179** may be attached to the carriage body **160** and secured in place with the axles **170** which extend transversely through the carriage body **160.** The bumper assemblies **179** may include rubber end caps **173** which cushion the carriage component **122** when the carriage component **122** encounters an end stop **174** located at either end of the rail **118,** the end stops **174** being secured in the rail **118** by a fastener **125,** which may be a bolt and a nut in some embodiments. According to some aspects of the carriage component **122** described herein, the bumper assemblies **179** are optional and, as such, it should be understood that the carriage component **122** may be constructed without the bumper assemblies **179.**

Turning now to **FIG. 5****,** there is shown a block diagram of internal components of the illustrative remote control unit **106** according to one or more aspects shown and described herein. As shown in **FIG. 5****,** the remote control unit **106,** which is capable of implementing methods set forth herein, includes a processor **302,** which performs an example method by execution of processing instructions **320** that are stored in memory **304** connected to the processor **302,** as well as controlling the operations of the hoist assembly **104** in accordance with some aspects discussed herein. The various components of the remote control unit **106** may be connected by a data/control bus **306.**

The remote control unit **106** may include one or more input/output (I/O) interface devices **310** and **312** for communicating with external devices. For example, the I/O interface **310** may communicate with one or more external devices for one or more purposes, e.g., displaying information, receiving external input, e.g., start/stop commands, pairing requests, raise/lower commands, etc., input from one or more user controls **129,** such as a switch, key, icon, and/or the like. The I/O interface **312** may communicate with external devices such as a user device (e.g., a mobile communications device, loT device, and the like), via a suitable a communications link. The communications link established by the I/O interface **312** may be implemented in accordance with any suitable wide or personal area network standards including, for example and without limitation, 802.11(x), Bluetooth, NFC, I/R, or the like. In accordance with some aspects, such a communication link may be used to establish bi-direction communication with an external device for any suitable operation, e.g., programming of the remote control unit **106,** sending/receiving data regarding a hoist assembly **104,** sending/receiving data regarding subject or caregiver, and the like. The I/O interface **310** may be implemented as a suitable transceiver capable of establishing bi-directional communication with external devices. In such aspects, the communications link established by the I/O interface **310** may be implemented as a near-field or personal area network, e.g., Bluetooth^{®} or other suitable short-range wireless technology standard. In other aspects, such a communications link may be an infra-red or near infra-red wireless communication link.

The remote control unit **106** shown in **FIG.** 5 may further include a separate transceiver **314** operably coupled to the I/O interfaces **310, 312** and processor **302** via the data/control bus **306.** In some aspects, the transceiver **314** may be configured to communicate with a corresponding transceiver of a hoist assembly **104,** as discussed below. Suitable examples of such a transceiver **314** may include, but are not limited to, a NUCLEO-WB55RG board or dongle by STMicroelectronics International N.V., which includes Bluetooth^{®} specification v5.4, IEEE 802.15.4-2011 PHY and MAC, supporting Thread^{®} 1.3, Matter, and Zigbee^{®} 3.0. Accordingly, in some aspects, the transceiver **314** may operate independently of the I/O interfaces **310, 312,** via an integrated antenna.

In accordance with some aspects, the remote control unit **106** may include one or more user controls **129,** as discussed in greater detail above. Further, according to the example implementation of **FIG. 5**, the remote control unit **106** includes a display **308** operably coupled to the processor **302** via the data/control bus **306.** Such a display **308** may be implemented, for example and without limitation, as a touchscreen, LCD, LED, elnk, or other suitable display format capable of providing visual information to a caregiver. In some aspects, the display **308** may be configured to generate a visual indicator as to, for example and without limitation, battery status, pairing, distance from hoist assembly **104,** and the like.

As shown in **FIG. 5**, the remote control unit **106** may further include a speaker **316** operable to generate an alarm or alert in response to a determination that the remote control unit **106** has exceeded a predetermined distance from the hoist assembly **104** with which the remote control unit **106** is paired, as discussed in greater detail below with respect to **FIG. 7**. In accordance with varying aspects, the speaker **316** may be appropriately sized and shaped to fit within the remote control unit **106.** According to further aspects, the alarm or alert may be generated in addition to or in place of activation of the indicator **103.** For example, when a determination is made that the remote control unit **106** is outside a predetermined proximity to the paired hoist assembly **104,** the speaker **316** may be activated to generate the alarm/alert while simultaneously the indicator **103** (e.g., a light or the like) illuminates in a flashing or continuous manner. Suitable examples of the alarm/alert generated by speaker **316** may include, for example and without limitation, a chirp, beep, tone, voice alert, and/or the like.

The example remote control unit **106** shown in **FIG. 5** may also include a vibrator **318,** e.g., a small motor that spins an offset weight to create vibrations. It will be appreciated that other haptic feedback mechanisms may be incorporated into the remote control unit **106** in place of or in addition to the vibrator **318** so as to generate a haptic notification to a caregiver regarding the remote control unit **106,** and the use of a vibrator **318** is intended solely as one non-limiting example of such a component. According to varying aspects disclosed and contemplated herein, the vibrator **318** may be activated upon a determination that the remote control unit **106** has exceeded a predetermined distance away from the hoist assembly **104** with which the remote control unit **106** is paired. For example, when a determination is made that the remote control unit **106** is outside a predetermined proximity to the paired hoist assembly **104,** the vibrator **318** may be activated to vibrate the remote control unit **106** simultaneously (or independent of) the speaker **316** generating the alarm/alert and/or the indicator **103** illuminating in a flashing or continuous manner.

Although not illustrated in **FIG. 5****,** the remote control unit **106** may be equipped with a suitable internal power supply, capable of providing electrical power to the various components included in the remote control unit **106.** Suitable examples of such a power supply may include, for example and without limitation, alkaline batteries, lithium-ion batteries, nickel-cadmium batteries, and/or other types of disposable and/or rechargeable batteries. It will be appreciated that the remote control unit **106** may further include a power supply compartment configured to receive and store the aforementioned power supply. In accordance with varying aspects, the power supply compartment may be accessible to the caregiver, e.g., to replace disposable batteries. In other aspects, such as an integrated, rechargeable aspect, a port, such as a USB standard-based port, may be used to effectuate recharging of the power supply. According to other aspects, such recharging may be accomplished via induction charging.

It will be appreciated that the remote control unit **106** illustrated in **FIG. 5** is capable of implementation using a distributed computing environment, such as a computer network, which is representative of any distributed communications system capable of enabling the exchange of data between two or more electronic devices. It will be further appreciated that such a computer network includes, for example and without limitation, a virtual local area network, a wide area network, a personal area network, a local area network, the Internet, an intranet, or any suitable combination thereof. Accordingly, such a computer network comprises physical layers and transport layers, as illustrated by various conventional data transport mechanisms, such as, for example and without limitation, Token-Ring, Ethernet, or other wireless or wire-based data communication mechanisms.

According to one example embodiment, the remote control unit **106** includes hardware, software, and/or any suitable combination thereof, configured to interact with an associated user, a networked device, networked storage, remote devices, hoist assemblies **104,** and/or the like.

The memory **304** illustrated in **FIG. 5** as a component of the remote control unit **106** may represent any type of non-transitory computer readable medium such as random access memory (RAM), read only memory (ROM), magnetic disk or tape, optical disk, flash memory, or holographic memory. In one embodiment, the memory **304** comprises a combination of random access memory and read only memory. In some embodiments, the processor **302** and memory **304** may be combined in a single chip. The network interface(s) **310, 312** allow the remote control unit **106** to communicate with other devices via a computer network, (e.g., the Internet) or direct communication with such other devices, and may comprise a modulator/demodulator (MODEM). Memory **304** may store data processed in the method as well as the instructions for performing the exemplary method.

The processor **302** can be variously embodied, such as by a single core processor, a dual core processor (or more generally by a multiple core processor), a digital processor and cooperating math coprocessor, a digital controller, or the like. The processor **302,** in addition to controlling the operation of the remote control unit **106,** executes instructions **320** stored in memory **304** for performing the method set forth hereinafter.

As shown in **FIG. 5****,** the instructions **320** stored in memory **304** may include a pairing component **322,** configured to facilitate pairing of the remote control unit **106** with an external device, e.g., the hoist assembly **104.** In accordance with some aspects, the pairing component **322** may be configured to interact with the transceiver **314** to exchange a link key with the hoist assembly **104,** establishing bi-directional communication between the remote control unit **106** and the hoist assembly **104.**

The instructions **320** stored in memory **304** of the remote control unit **106** may further include a timing component **324** configured to implement a check timer corresponding to a predetermined period of time that occurs between connection requests. That is, the timing component **324** may initiate the start of the check timer which corresponds to a period before a connection request is sent to the paired hoist assembly **104.** That is, the timing component **324** waits a predetermined period of time (e.g., a check time) before sending a connection request. In accordance with some aspects, this check time may correspond to a preselected period of time, e.g., every 5 seconds, every 10 seconds, every 15 seconds, 30 seconds, and so forth. In other aspects, the period of time may correspond to less than or equal to 5 seconds, less than or equal to 10 seconds, less than or equal to 15 seconds, less than or equal to 20 seconds, and the like. The timing component **324** may further be configured to implement a connection timer corresponding to a preselected time during which connection attempts are made with the hoist assembly **104.** That is, the timing component **324** may activate a connection timer having a preselected duration during which the remote control unit **106** sends connection requests to the paired hoist assembly **104.** In accordance with some aspects, this connection timer may be set to a preselected period of time, e.g., every 100 milliseconds, every 200 milliseconds, every 300 milliseconds, 500 milliseconds, or other suitable period of time.

As shown in **FIG. 5****,** the instructions **320** stored in memory **304** may also include a connection determination component **326** configured to determine whether a wireless connection is present between the remote control unit **106** and the hoist assembly **104.** According to some aspects, the connection determination component **326** may receive, via the transceiver **314,** a wireless signal transmitted by the hoist assembly **104** to the remote control unit **106** indicating that bi-directional communications are present. The connection determination component **326** may be communicatively coupled to the timing component **324,** so as to, in response to a check timer having elapsed, determine whether a connection with the hoist assembly **104** is present. In accordance with other aspects, the connection determination component **326** may be configured to determine, in conjunction with the timing component **324,** whether a connection has been established during the connection timer.

The instructions **320** stored in memory **304** may further include a retry counter component **328** configured to track the number of connection attempts made to establish a connection with the hoist assembly **104.** The retry counter component **328** may be configured with a preset number of allowable connection attempts, e.g., a limit on the number of failed connection attempts that may occur before an alert/alarm is generated. That is, the retry counter component **328** may be configured to allow a set number of connection attempts prior to enabling the alert/alarm component **330** to activate. In some aspects, the retry counter component **328** may implement a retry counter with a limit of five attempts, ten attempts, fifteen attempts, etc.

As shown in **FIG. 5****,** the instructions **320** stored in memory **304** may also include an alert/alarm component **330** configured to initiate an alert/alarm via any of the mechanisms described above. That is, the alert/alarm component **330** may be configured to activate the indicator **103,** the speaker **316,** and/or the vibrator **318** indicating that a connection has been lost or cannot be established. Stated another way, the alert/alarm component **330** determines that the remote control unit **106** is outside a predetermined range relative to hoist assembly **104,** and activates one or more of the aforementioned notification components, thereby providing audible, visual, and/or haptic notification of the location of the remote control unit **106.** Additional interactions and functioning of the components described above with respect to the remote control unit **106** are discussed in greater detail below with respect to **FIG. 7****.**

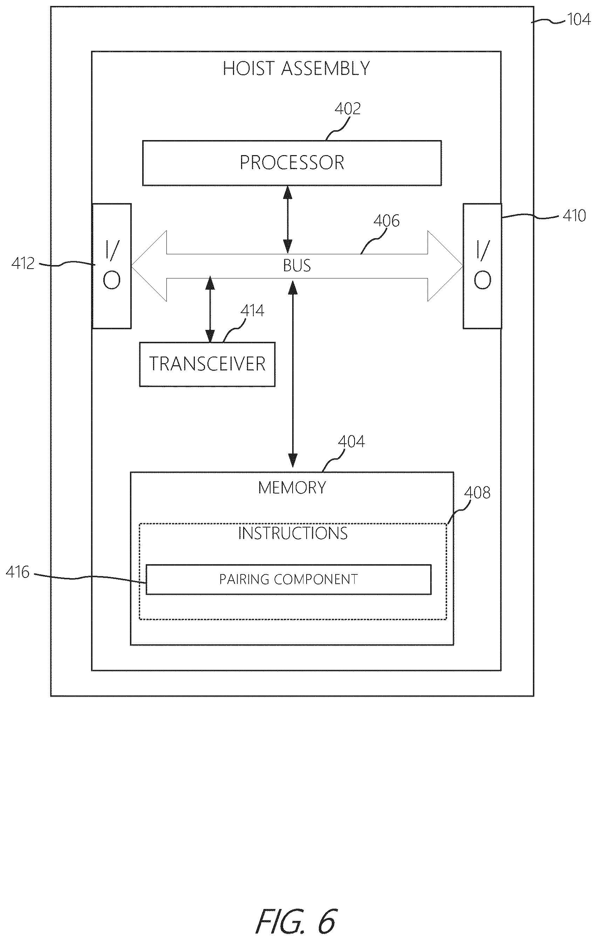

Referring now to **FIG. 6****,** there is shown a block diagram of internal components of the illustrative hoist assembly **104** according to one or more aspects shown and described herein. As shown in **FIG. 6****,** the hoist assembly **104,** which is capable of implementing methods set forth herein, includes a processor **402,** which performs an example method by execution of processing instructions **408** that are stored in memory **404** connected to the processor **402,** as well as controlling the operations of the hoist assembly **104** in accordance with some aspects discussed herein. The various components of the remote control unit **106** may be connected by a data/control bus **406.**

The hoist assembly **104** shown in **FIG. 6** may include one or more input/output (I/O) interface devices **410** and **412** for communicating with external devices. For example, the I/O interface **410** may communicate with one or more external devices for one or more purposes, e.g., displaying information, receiving external input, receiving pairing requests, receiving start/stop commands, receiving load limits, receiving raise/lower commands, sending/receiving positioning data, and/or the like. The I/O interface **412** may communicate with external devices such as a user device (e.g., a mobile communications device, IoT device, and the like), via a suitable a communications link. The communications link established by the I/O interface **412** may be implemented in accordance with any suitable wide or personal area network standards including, for example and without limitation, 802.11(x), Bluetooth, NFC, I/R, or the like. In accordance with some aspects, such a communication link may be used to establish bi-direction communication with an external device for any suitable operation, e.g., programming of the hoist assembly **104,** sending/receiving load limits, sending/receiving speed settings, sending/receiving position settings, and the like. The I/O interface **410** may be implemented as a suitable transceiver capable of establishing bi-directional communication with external devices. In such aspects, the communications link established by the I/O interface **410** may be implemented as a near-field or personal area network, e.g., Bluetooth^{®} or other suitable short-range wireless technology standard. In other aspects, such a communications link may be an infra-red or near infra-red wireless communication link.

The hoist assembly **104** shown in **FIG.** 6 may further include a separate transceiver **414** operably coupled to the I/O interfaces **410, 412** and processor **402** via the data/control bus 406. In some aspects, the transceiver **414** may be configured to communicate with a corresponding transceiver of a remote control unit **106,** as discussed below. Suitable examples of such a transceiver **414** may include, but are not limited to, a NUCLEO-WB55RG board or dongle by STMicroelectronics International N.V., which includes Bluetooth^{®} specification v5.4, IEEE 802.15.4-2011 PHY and MAC, supporting Thread^{®} 1.3, Matter, and Zigbee^{®} 3.0. Accordingly, in some aspects, the transceiver **414** may operate independently of the I/O interfaces **410, 412,** via an integrated antenna.

It will be appreciated that the hoist assembly **104** illustrated in **FIG. 6** is capable of implementation using a distributed computing environment, such as a computer network, which is representative of any distributed communications system capable of enabling the exchange of data between two or more electronic devices. It will be further appreciated that such a computer network includes, for example and without limitation, a virtual local area network, a wide area network, a personal area network, a local area network, the Internet, an intranet, or any suitable combination thereof. Accordingly, such a computer network comprises physical layers and transport layers, as illustrated by various conventional data transport mechanisms, such as, for example and without limitation, Token-Ring, Ethernet, or other wireless or wire-based data communication mechanisms.

According to one example embodiment, the hoist assembly **104** includes hardware, software, and/or any suitable combination thereof, configured to interact with an associated user, a networked device, networked storage, remote devices, remote control units **106,** and/or the like.

The memory **404** illustrated in **FIG. 6** as a component of the hoist assembly **104** may represent any type of non-transitory computer readable medium such as random access memory (RAM), read only memory (ROM), magnetic disk or tape, optical disk, flash memory, or holographic memory. In one embodiment, the memory **404** comprises a combination of random access memory and read only memory. In some embodiments, the processor **402** and memory **404** may be combined in a single chip. The network interface(s) **410, 412** allow the hoist assembly **104** to communicate with other devices via a computer network, (e.g., the Internet) or direct communication with such other devices, and may comprise a modulator/demodulator (MODEM). Memory **404** may store data processed in the method as well as the instructions for performing the exemplary method.

The processor **402** can be variously embodied, such as by a single core processor, a dual core processor (or more generally by a multiple core processor), a digital processor and cooperating math coprocessor, a digital controller, or the like. The processor **402,** in addition to controlling the operation of the hoist assembly **104,** executes instructions **408** stored in memory **404** for performing the method set forth hereinafter.

As shown in **FIG. 6****,** the instructions **408** stored in memory **404** may include a pairing component **416,** configured to facilitate pairing of the hoist assembly **104** with an external device, e.g., the remote control unit **106.** In accordance with some aspects, the pairing component **322** may be configured to interact with the transceiver **314** to exchange a link key with the remote control unit **106,** establishing bi-directional communication between the remote control unit **106** and the hoist assembly **104.**

Turning now to **FIG.** 7, there is shown a flowchart **500** illustrating a method for detecting and preventing loss of a remote control unit **106** in accordance with some aspects disclosed and contemplated herein. The method **500** begins at step **502,** whereupon a remote control unit **106** is paired with a hoist assembly **104.** That is, at step **502,** the remote control unit **106** and the hoist assembly **104** undergo a pairing procedure, linking the remote control unit **106** to the hoist assembly **104,** enabling the hoist assembly **104** to receive commands from remote control unit **106.** According to some aspects disclosed herein, the pairing occurring at step **502** is performed using a Bluetooth^{®} protocol.

As used herein, the Bluetooth^{®} protocol is a personal area network protocol designed to allow Bluetooth^{®} equipped or enabled devices to communicate with each other within a confined area. In accordance with one example aspect disclosed and contemplated herein, during the pairing process, the remote control unit **106** and the hoist assembly **104** establish a shared secret, e.g., a link key. Subsequent to the pairing process, the remote control unit **106** and the hoist assembly **104** store the link key so that the pairing process is not required afterwards. Thereafter, as will be appreciated, the remote control unit **106** and the hoist assembly **104** can "bond" whenever they are close enough, e.g., the devices can automatically establish a connection whenever they are close enough. Pairing may also require an authentication process where a user must validate the connection between the two Bluetooth^{®} devices.

Accordingly, the remote control unit **106** and the hoist assembly **104** each has a 6-byte device address called BD_ADDR (which stands for Bluetooth Device Address) that uniquely identifies the device. When the remote control unit **106** and the hoist assembly **104** are brought within wireless communication range, the two devices will exchange their BD_ADDR to see if they are already paired. If the BD_ADDR is recognized and a stored link key is available, the two devices can use the link key to bond, that is, they will re-establish the Bluetooth^{®} communication channel without the need to go through the pairing process. According to some aspects contemplated herein, the pairing process between the remote control unit **106** and the hoist assembly **104** may require a technician to facilitate the pairing. Such an aspect, as will be appreciated, may function to prevent accidental de-pairing of the remote control unit **106** from the specific hoist assembly **104** through caretaker or subject error. The aforementioned pairing process may be implemented using Bluetooth^{®} Low Energy (BLE) technology. According to such an implementation, BLE provides for lower power consumption, allowing for continuous communication between paired devices with reduced power consumption.

Returning to **FIG. 7****,** after pairing, the retry counter component **328** sets the retry counter to zero. That is, no retries have been attempted to reconnect with the hoist assembly **104** at step **504.** In accordance with some aspects, the retry counter component **328** stored in memory **304** of the remote control unit **106** may begin monitoring retry attempts after pairing, so as to begin the process of maintaining proximity of the remote control unit **106** with the hoist assembly **104** and avoiding loss of the remote control unit **106** used for controlling the hoist assembly **104.**

At step **506,** the timing component **324** or other suitable component associated with the remote control unit **106** initiates a check timer. As noted above, the check timer corresponds to a period before a connection request is sent to the paired hoist assembly **104.** That is, the timing component **324** waits a predetermined period of time (e.g., a check time) before sending a connection request. In accordance with some aspects, this check time may correspond to a preselected period of time, e.g., every 5 seconds, every 10 seconds, every 15 seconds, 30 seconds, and so forth. A determination is then made at step **508** whether the check timer has expired, e.g., lapsed.

Upon a determination at step **508** that the check timer has not yet expired, operations return to waiting for the period to lapse. When it is determined at step **508** that the check timer has expired, operations proceed to step **510,** whereupon a connection request is communicated from the remote control unit **106** to the hoist assembly **104.** That is, at step **510,** a communication is transmitted via the transceiver **314** of the remote control unit **106** to the transceiver **414** of hoist assembly **104** requesting the establishment of a bi-directional communication connection.

At step **512,** the timing component **324** or other suitable component of the remote control unit **106** the initiates the connection timer. In accordance with some aspects, the connection timer may have a preselected duration during which the remote control unit **106** sends connection requests to the paired hoist assembly **104.** For example, the connection timer may be set to a preselected period of time, e.g., every 100 milliseconds, every 200 milliseconds, every 300 milliseconds, 500 milliseconds, or other suitable period of time. A determination is then made at step **514** by the connection determination component **326** whether the remote control unit **106** has connected with the hoist assembly **104.**

When it is determined at step **514** that a connection is established with the hoist assembly **104,** operations proceed to step **516,** whereupon the connection timer is stopped or paused. Any alarms/alerts that may be currently active on the remote control unit **106** are then terminated at step **518.** Operations then proceed to step **520,** whereupon the remote control unit **106** disconnects from the hoist assembly **104** and operations return to step **504,** thereafter operations proceed as described above.

Upon a determination at step **514** by the connection determination component **326** that a connection has not been established, e.g., the remote control unit **106** is not connected to the hoist assembly **104,** operations progress to step **522.** The inability to establish a connection may be caused by a variety of problems, including, for example, the remote control unit **106** may have been moved a distance away from the hoist assembly **104** that exceeds the distance afforded by the communications protocol used, e.g., for Bluetooth^{®} Low Energy protocols, the distance generally is less than 10 meters, e.g., the outside of the room in which the hoist assembly **104** to which the remote control unit **106** is paired.

At step **522,** a determination is made whether the connection timer has expired. When it is determined that the connection timer has not expired, operations return to step **514** to determine whether a connection has been established. If no connection has yet been established, the determination is made at step **522** whether the connection timer has expired. Upon a determination at step **522** that the connection timer has expired, the retry counter is incremented by one attempt at step **524.** As noted above, the remote control unit **106** may be configured with a retry counter component **328** that maintains a count of the number of connection attempts performed by the remote control unit **106** to establish a connection with the hoist assembly **104.** After incrementing the retry counter at step **524,** a determination is made at step **526** whether the retry counter has exceeded the preset number of connection attempts.

Upon a determination that the retry counter has not yet met the preset limit at step **526,** flow returns to step **506** whereupon operations of the remote control unit **106** proceed as discussed above. When it is determined that the retry counter has met the preset limit, e.g., five or more unsuccessful attempts have been made, ten or more unsuccessful attempts have been made, etc., operations proceed to step **528,** whereupon the alert/alarm component **330** activates one or more of an audible and/or visible alerts. That is, the alert/alarm component **330** may be configured to activate the indicator **103,** the speaker **316,** and/or the vibrator **318** indicating that a connection has been lost or cannot be established. Stated another way, the alert/alarm component **330** determines that the remote control unit **106** is outside a predetermined range relative to hoist assembly **104,** and activates one or more of the aforementioned notification components.

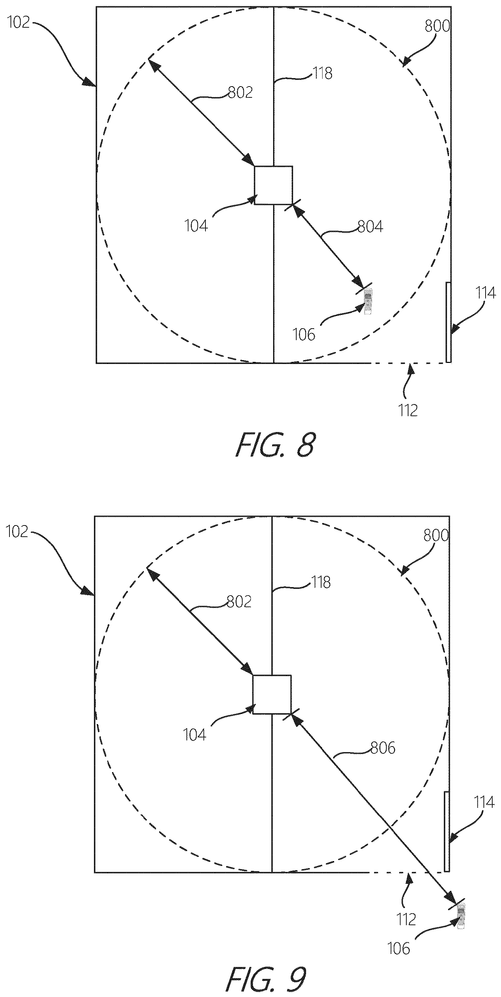

Turning now to **FIGS. 8** and **9****,** there are shown diagrams depicting application of the systems and methods described in detail above. As shown in **FIG. 8****,** there is shown a top view of the room **102** in which the hoist assembly **104** and paired remote control unit **106** are located. As shown in **FIG. 8****,** the communications protocol used by the transceiver **414** of the hoist assembly **104** and the transceiver **314** of the remote control unit **106** has a preset coverage area **800,** shown by the dashed lines within the room **102.** In accordance with some aspects, the coverage area **800** shown in **FIG.** 8 may have a defined radius **802** corresponding to a set distance away from the hoist assembly **104** from which the remote control unit **106** will still have connectivity. Stated another way, while the remote control unit **106** remains within the coverage area **800,** e.g., within the same room **102** in which the hoist assembly **104** is positioned, no alert/alarm will be needed, as described above with respect to steps **502-520 of** **FIG. 7****.** However, when the remote control unit **106** is moved outside the room **102,** as shown in **FIG. 9****,** the process described above with respect to steps **502** through **528** of **FIG. 7****.**

Referring now to **FIG. 9****,** there is shown a top view of the room **102** in which the hoist assembly **104** is located and after the remote control unit **106** has been removed from the room **102.** As shown in **FIG. 9****,** the remote control unit **106** is outside the preset coverage area **800** of the communications protocol used by the transceiver **414** of the hoist assembly **104** and the transceiver **314** of the remote control unit **106.** As shown in **FIG. 9****,** the distance **806** of the remote control unit **106** is greater than the defined radius **802** corresponding to the set distance away from the hoist assembly **104** from which the remote control unit **106** will still have connectivity. Stated another way, while the remote control unit **106** remains outside the coverage area **800,** e.g., outside the room **102** in which the hoist assembly **104** is positioned, the remote control unit **106** generates an alert/alarm, as described above with respect to steps **502-528 of** **FIG. 7****.**

Using **FIGS. 8-9****,** when a caregiver is present in the room **102** and using the remote control unit **106** to control the hoist assembly **104,** the remote control unit **106** is connected to the hoist assembly **104** and thus the check timer and connection timers are satisfied. Accordingly, no alert/alarm is generated by the remote control unit. However, when the caregiver removes the remote control unit **106** from the room **102,** e.g., leaves the remote control unit **106** in a lab coat pocket and walks out the entranceway **112.** As shown in **FIG. 9****,** the remote control unit **106** is now a second distance **806** away from the hoist assembly **104,** the remote control unit **106,** once the check timer has lapsed, sends a connection request to the hoist assembly **104,** as discussed above with respect to **FIG. 7** above.

Embodiments of the invention can be described with reference to the following numbered clauses, with preferred features laid out in the dependent clauses:
1. A wirelessly controllable hoist system, comprising:
   a hoist assembly comprising a hoist wireless transceiver configured for personal area network communications; and
   a remote control unit operable to wirelessly control the hoist assembly, comprising:
      a remote wireless transceiver configured for communication with the hoist wireless transceiver of the hoist assembly via a personal area network,
      at least one of an audio, a haptic, or a visual indication component affixed to a housing of the remote control unit, operable to generate a respective audible or visible alarm, and
      a processor in communication with the remote wireless transceiver and memory storing instructions which are executed by the processor to:
         perform at least one connection attempt to establish bi-directional communication with the hoist assembly, and
         in response to a failed connection attempt, generate the alarm via the at least one of the audio, the haptic, or the visual indication component.
2. The wirelessly controllable hoist system of clause 1, wherein the wirelessly controllable hoist system is an overhead hoist system.
3. The wirelessly controllable hoist system of either clause 1 or clause 2, wherein the remote wireless transceiver and the hoist wireless transceiver are at least one of a Bluetooth transceiver, a Zigbee transceiver, or a near-field communication transceiver.
4. The wirelessly controllable hoist system of any preceding clause, wherein the at least one of the audio, the haptic, or the visual indication component is selected from a group consisting of an indicator light, a speaker, and a vibrator.
5. The wirelessly controllable hoist system of any preceding clause , further comprising instructions to initiate a connection timer corresponding to a time period during which a connection attempt is made.
6. The wirelessly controllable hoist system of clause 5, further comprising instructions to sending the connection attempt subsequent to the initiation of the connection timer.
7. The wirelessly controllable hoist system of either clause 5 or clause 6, further comprising instructions to increment a retry counter corresponding to a number of failed connection attempts in response to a failure to connection during the time period of the connection timer.
8. The wirelessly controllable hoist system of clause 7, further comprising instructions to generate the alarm in response to the retry counter exceeding a retry limit.
9. The wirelessly controllable hoist system of clause 8, wherein the retry limit is selected from a group consisting of 5 failed connection attempts, 10 failed connection attempts, 15 failed connections attempts, or 20 failed connection attempts.
10. The wirelessly controllable hoist system of any one of clauses 5 to 9, further comprising instructions to stop the alarm in response to a successful connection attempt.
11. The wirelessly controllable hoist system of any one of clauses 5 to 10, wherein the time period is selected from a group consisting of less than or equal to 100 milliseconds, less than or equal to 200 milliseconds, less than or equal to 300 milliseconds, or less than or equal to 500 milliseconds.
12. The wirelessly controllable hoist system of any one of clauses 5 to 11, further comprising instructions to initiate a check timer corresponding to a check time period to occur before a connection request is attempted.
13. The wirelessly controllable hoist system of clause 12, wherein the connection timer is initiated in response to the check timer having met or exceeded the check time period.
14. The wirelessly controllable hoist system of clause 13, wherein the check time period is selected from the group consisting of less than or equal to 5 seconds, less than or equal to 10 seconds, less than or equal to 15 seconds, or less than or equal to 20 seconds.
15. A remote control unit of a hoist system, comprising:
   a remote wireless transceiver configured for communication with a wireless transceiver of an associated hoist assembly via a personal area network;
   at least one of an audio, a haptic, or a visual indication component affixed to a housing of the remote control unit, operable to generate a respective audible or visible alarm; and
   a processor in communication with the remote wireless transceiver and memory storing instructions which are executed by the processor to:
      initiate a connection timer corresponding to a time period during which a connection attempt is made,
      perform at least one connection attempt to establish bi-directional communication with the hoist assembly during the time period, and
      in response to a preset number of failed connection attempts, generate the alarm via the at least one of the audio, the haptic, or the visual indication component.
16. The remote control unit of clause 15, wherein the hoist system is an overhead hoist system.
17. The remote control unit of either clause 15 or clause 16, wherein the remote wireless transceiver is at least one of a Bluetooth transceiver, a Zigbee transceiver, or a near-field communication transceiver.
18. The remote control unit of any one of clauses 15 to 17, wherein the at least one of the audio, the haptic, or the visual indication component is selected from a group consisting of an indicator light, a speaker, and a vibrator.
19. The remote control unit of clause 15, further comprising instructions to increment a retry counter corresponding to the preset number of failed connection attempts in response to a failure to connection during the time period of the connection timer.
20. The remote control unit of clause 19, further comprising instructions to generate the alarm in response to the retry counter exceeding a retry limit.
21. The remote control unit of clause 20, wherein the retry limit is selected from the group consisting of 5 failed connection attempts, 10 failed connection attempts, 15 failed connections attempts, or 20 failed connection attempts.
22. The remote control unit of any one of clauses 15 to 21, further comprising instructions to stop the alarm in response to a successful connection attempt.
23. The remote control unit of any of clauses 21 to 22, wherein the time period is selected from the group consisting of less than or equal to 100 milliseconds, less than or equal to 200 milliseconds, less than or equal to 300 milliseconds, or less than or equal to 500 milliseconds.
24. The remote control unit of clause 21, further comprising instructions to initiate a check timer corresponding to a check time period to occur before a connection request is attempted.
25. The remote control unit of clause 24, wherein the connection timer is initiated in response to the check timer having met or exceeded the check time period.
26. The remote control unit of clause 25, wherein the check time period is selected from the group consisting of less than or equal to 5 seconds, less than or equal to 10 seconds, less than or equal to 15 seconds, or less than or equal to 20 seconds.
27. A remote control unit of a hoist system, comprising:
   a remote wireless transceiver configured for communication with a wireless transceiver of an associated hoist assembly via a personal area network;
   at least one of an audio, a haptic, or a visual indication component affixed to a housing of the remote control unit, operable to generate a respective audible or visible alarm; and
   a processor in communication with the remote wireless transceiver and memory storing instructions which are executed by the processor to:
      initiate a connection timer corresponding to a time period during which a connection attempt is made,
      perform the connection attempt to establish bi-directional communication with the hoist assembly during the time period,
      increment a retry counter in response to a failed connection attempt occurring during the time period,
      compare the incremented retry counter to a retry limit of failed connection attempts, and
      in response to a result of the comparison meeting the retry limit of failed connection attempts, generate the alarm via the at least one of the audio, the haptic, or the visual indication component.
28. The remote control unit of clause 27, wherein the remote wireless transceiver is at least one of a Bluetooth transceiver, a Zigbee transceiver, or a near-field communication transceiver.
29. The remote control unit of either clause 27 or clause 28, wherein the hoist system is an overhead hoist system.
30. The remote control unit of any one of clauses 27 to 29, wherein the at least one of the audio, the haptic, or the visual indication component is selected from a group consisting of an indicator light, a speaker, and a vibrator.
31. The remote control unit of any one of clauses 29 to 30, wherein the time period is selected from the group consisting of less than or equal to 100 milliseconds, less than or equal to 200 milliseconds, less than or equal to 300 milliseconds, or less than or equal to 500 milliseconds.
32. The remote control unit of any one of clauses 30 to 31, wherein the retry limit is selected from the group consisting of 5 failed connection attempts, 10 failed connection attempts, 15 failed connections attempts, or 20 failed connection attempts.
33. The remote control unit of any one of clauses 31 to 32, further comprising instructions to initiate a check timer corresponding to a check time period to occur before a connection request is attempted.
34. The remote control unit of clause 33, wherein the connection timer is initiated in response to the check timer having met or exceeded the check time period.
35. The remote control unit of clause 34, wherein the check time period is selected from the group consisting of less than or equal to 5 seconds, less than or equal to 10 seconds, less than or equal to 15 seconds, or less than or equal to 20 seconds.
36. The remote control unit of any one of clause 27 to 35, further comprising instructions to stop the alarm in response to a successful connection attempt.
37. The remote control unit of any one of clause 27 to 36, further comprising instructions to stop the connection timer in response to a successful connection attempt.
38. The remote control unit of any one of clause 27 to 37, further comprising instructions to reset the retry counter in response to a successful connection attempt.
39. A wirelessly controllable hoist system, comprising:
   a hoist assembly comprising a hoist wireless transceiver configured for personal area network communications; and
   a remote control unit operable to wirelessly control the hoist assembly, comprising:
      a remote wireless transceiver configured for communication with the hoist wireless transceiver of the hoist assembly via a personal area network,
      at least one of an audio, a haptic, or a visual indication component affixed to a housing of the remote control unit, operable to generate a respective audible or visible alarm; and
      a processor in communication with the remote wireless transceiver and memory storing instructions which are executed by the processor to:
         initiate a check timer corresponding to a check time period to occur before a connection request is attempted,
         initiate, in response to the check timer having met or exceeded the check time period, a connection timer corresponding to a time period during which the connection attempt is made,
         perform the connection attempt to establish bi-directional communication with the hoist assembly during the time period,
         increment a retry counter in response to a failed connection attempt occurring during the time period,
         compare the incremented retry counter to a retry limit of failed connection attempts, and
         in response to a result of the comparison meeting the retry limit of failed connection attempts, generate the alarm via the at least one of the audio, the haptic, or the visual indication component.
40. The wirelessly controllable hoist system of clause 39, wherein the time period is selected from the group consisting of less than or equal to 100 milliseconds, less than or equal to 200 milliseconds, less than or equal to 300 milliseconds, or less than or equal to 500 milliseconds.
41. The wirelessly controllable hoist system of either clause 39 or clause 40, wherein the retry limit is selected from the group consisting of 5 failed connection attempts, 10 failed connection attempts, 15 failed connections attempts, or 20 failed connection attempts.
42. The remote control unit of any one of clause 39 to 41, wherein the check time period is selected from the group consisting of less than or equal to 5 seconds, less than or equal to 10 seconds, less than or equal to 15 seconds, or less than or equal to 20 seconds.
43. The wirelessly controllable hoist system of any one of clause 39 to 42, further comprising instructions to stop the alarm in response to a successful connection attempt.
44. The wirelessly controllable hoist system of any one of clause 39 to 43, further comprising instructions to stop the connection timer in response to a successful connection attempt.
45. The wirelessly controllable hoist system of any one of clause 39 to 44, further comprising instructions to reset the retry counter in response to a successful connection attempt.
46. A remote control unit of a hoist system, comprising:
   a remote wireless transceiver configured for communication with a wireless transceiver of an associated hoist assembly;
   at least one of an audio, a haptic, or a visual indication component affixed to a housing of the remote control unit, operable to generate a respective audible or visible alarm; and
   a processor in communication with the remote wireless transceiver and memory storing instructions which are executed by the processor to:
      perform at least one connection attempt to establish bi-directional communication with the hoist assembly, and
      in response to a preset number of failed connection attempts, generate the alarm via the at least one of the audio, the haptic, or the visual indication component.
47. The remote control unit of clause 46, wherein the hoist system is an overhead hoist system.
48. The remote control unit of either clause 46 or clause 47, wherein the remote wireless transceiver is at least one of a Bluetooth transceiver, a Zigbee transceiver, or a near-field communication transceiver.
49. The remote control unit of any one of clauses 46 to 48, wherein the at least one of the audio, the haptic, or the visual indication component is selected from a group consisting of an indicator light, a speaker, and a vibrator.
50. The remote control unit of any one of clauses 46 to 49, further comprising instructions to increment a retry counter corresponding to the preset number of failed connection attempts in response to a failure to connect.
51. The remote control unit of clause 50, further comprising instructions to generate the alarm in response to the retry counter exceeding a retry limit.
53. The remote control unit of any one of clauses 46 to 52, further comprising instructions to stop the alarm in response to a successful connection attempt.
52. The remote control unit of clause 51, wherein the retry limit is selected from the group consisting of 5 failed connection attempts, 10 failed connection attempts, 15 failed connections attempts, or 20 failed connection attempts.
54. The remote control unit of any one of clauses 46 to 53, further comprising instructions to initiate a check timer corresponding to a check time period to occur before a connection request is attempted.
55. The remote control unit of clause 54, wherein a connection timer is initiated in response to the check timer having met or exceeded the check time period.
56. The remote control unit of either clause 54 or clause 55, wherein the check time period is selected from the group consisting of less than or equal to 5 seconds, less than or equal to 10 seconds, less than or equal to 15 seconds, or less than or equal to 20 seconds.
57. The remote control unit of any one of clause 54 to 56, wherein the connection timer is initiated corresponding to a time period during which a connection attempt is made, and wherein the at least one connection attempt to establish bi-directional communication with the hoist assembly is performed during the time period.
58. The remote control unit of clause 57, wherein the time period is selected from the group consisting of less than or equal to 100 milliseconds, less than or equal to 200 milliseconds, less than or equal to 300 milliseconds, or less than or equal to 500 milliseconds.

## Claims

1. A wirelessly controllable hoist system, comprising:
a hoist assembly comprising a hoist wireless transceiver configured for personal area network communications; and
a remote control unit operable to wirelessly control the hoist assembly, comprising:
a remote wireless transceiver configured for communication with the hoist wireless transceiver of the hoist assembly via a personal area network,
at least one of an audio, a haptic, or a visual indication component affixed to a housing of the remote control unit, operable to generate a respective audible or visible alarm, and
a processor in communication with the remote wireless transceiver and memory storing instructions which are executed by the processor to:
perform at least one connection attempt to establish bi-directional communication with the hoist assembly, and
in response to a failed connection attempt, generate the alarm via the at least one of the audio, the haptic, or the visual indication component.

2. The wirelessly controllable hoist system of claim 1, wherein the wirelessly controllable hoist system is an overhead hoist system.

3. The wirelessly controllable hoist system of either claim 1 or claim 2, wherein the remote wireless transceiver and the hoist wireless transceiver are at least one of a Bluetooth transceiver, a Zigbee transceiver, or a near-field communication transceiver.

4. The wirelessly controllable hoist system of any preceding claim, wherein the at least one of the audio, the haptic, or the visual indication component is selected from a group consisting of an indicator light, a speaker, and a vibrator.

5. The wirelessly controllable hoist system of any preceding claim, further comprising instructions to initiate a connection timer corresponding to a time period during which a connection attempt is made.

6. The wirelessly controllable hoist system of claim 5, further comprising instructions to sending the connection attempt subsequent to the initiation of the connection timer.

7. The wirelessly controllable hoist system of either claim 5 or claim 6, further comprising instructions to increment a retry counter corresponding to a number of failed connection attempts in response to a failure to connection during the time period of the connection timer.

8. The wirelessly controllable hoist system of claim 7, further comprising instructions to generate the alarm in response to the retry counter exceeding a retry limit.

9. The wirelessly controllable hoist system of claim 8, wherein the retry limit is selected from a group consisting of 5 failed connection attempts, 10 failed connection attempts, 15 failed connections attempts, or 20 failed connection attempts.

10. The wirelessly controllable hoist system of any one of claims 5 to 9, further comprising instructions to stop the alarm in response to a successful connection attempt.

11. The wirelessly controllable hoist system of any one of claims 5 to 10, wherein the time period is selected from a group consisting of less than or equal to 100 milliseconds, less than or equal to 200 milliseconds, less than or equal to 300 milliseconds, or less than or equal to 500 milliseconds.

12. The wirelessly controllable hoist system of any one of claims 5 to 11, further comprising instructions to initiate a check timer corresponding to a check time period to occur before a connection request is attempted.

13. The wirelessly controllable hoist system of claim 12, wherein the connection timer is initiated in response to the check timer having met or exceeded the check time period.

14. The wirelessly controllable hoist system of claim 13, wherein the check time period is selected from the group consisting of less than or equal to 5 seconds, less than or equal to 10 seconds, less than or equal to 15 seconds, or less than or equal to 20 seconds.
